(19) Europäisches Patentamt
European Patent Office
Office européen des brevets

(11) **EP 4 749 507 A1**

(12) **EUROPEAN PATENT APPLICATION**
published in accordance with Art. 153(4) EPC

(43) Date of publication:
**27.05.2026 Bulletin 2026/22**

(21) Application number: **24859102.6**

(22) Date of filing: **17.06.2024**

(51) International Patent Classification (IPC):
**G06F 30/20** (2020.01) **G06F 30/15** (2020.01)

(52) Cooperative Patent Classification (CPC):
**G06F 30/15; G06F 30/20**

(86) International application number:
**PCT/JP2024/021842**

(87) International publication number:
**WO 2025/047056 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 JP 2023140674**

(71) Applicant: **JFE Steel Corporation
Tokyo, 100-0011 (JP)**

(72) Inventor: **AGEBA, Ryo
Tokyo 100-0011 (JP)**

(74) Representative: **Hoffmann Eitle
Patent- und Rechtsanwälte PartmbB
Arabellastraße 30
81925 München (DE)**

(54) **AUTOMOTIVE COMPONENT DESIGN METHOD, DEVICE, AND PROGRAM, AND AUTOMOTIVE COMPONENT MANUFACTURING METHOD**

(57)  An automotive component designing method according to the present invention includes: acquiring an automotive component model obtained by modeling an automotive component subjected to a compressive load in a longitudinal direction at a time of collision of an automobile (S1); setting a design space in a design target portion to be a design target (S3); generating a design target portion model obtained by modeling the set design space with a shell element and/or a solid element (S5); setting objectives that maximize a buckling load in a primary buckling mode obtained by linear buckling analysis in the automotive component model (S7); executing optimization analysis for obtaining an optimized shape of the design target portion model that satisfies the set objectives (S9); and determining a shape of the design target portion based on the optimized shape of the design target portion model (S11).

FIG.1

**Description**

Field

The present invention relates to an automotive component designing method, an automotive component designing device, and an automotive component designing program, in which an automotive component which is subjected to a compressive load in the longitudinal direction at a time of collision of the automobile is designed so as to enhance crashworthiness of the automotive component. Furthermore, the present invention relates to an automotive component manufacturing method in which the automotive component which is subjected to a compressive load in the longitudinal direction at a time of collision of the automobile is manufactured so as to enhance crashworthiness of the automotive component.

Background

While there is an increasing requirement for enhancement of crashworthiness of an automotive body, weight reduction of the automotive body for the purpose of reducing $CO_2$ emission is also required at the same time. In order to satisfy these requirements at the same time, it is important to design an automotive component having enhanced crashworthiness simultaneously with achievement of high intensity and thinning of a material (for example, a steel sheet) used for an automotive body.

The knowledge accumulated for many years has been very useful in designing automotive bodies and automotive components in consideration of crashworthiness. However, since an electric vehicle is equipped with a large-capacity battery, there is a need to ensure its space, and an automotive body frame structure of the electric vehicle is greatly different from that of a conventional gasoline vehicle. Furthermore, collision safety for this battery also needs to be considered. With the spread and spread of electric vehicles, there is a demand for a method of efficiently designing automotive bodies and automotive components more than ever.

As a technique of efficiently designing a high-performance automotive body, for example, Patent Literature 1 discloses an optimization method (optimized method) of obtaining an optimized shape for a part of a structural body (structural model) model (automotive body) using a computer. The method first sets a design space in a portion to be optimized in an automotive body, sets a loading condition and a constraint condition to be applied to the automotive body, and objective conditions (corresponding to "objectives" of the present application. Hereinafter, referred to as objectives) and constraints related to vehicle body performance such as stiffness and weight. Subsequently, an optimization analysis process of deleting an unnecessary portion in the design space so as to satisfy the objectives and the constraints is executed under the set loading condition and constraint condition to obtain an optimized shape of a part of the automotive body.

Citation List

Patent Literature

Patent Literature 1: JP 5585672 B

Summary

Technical Problem

According to the method disclosed in Patent Literature 1, it is possible to obtain an optimized shape of a part of an automotive body so as to satisfy the objectives by setting, as the objectives, maximizing stiffness, minimizing displacement and stress, minimizing strain energy, etc.

Therefore, the inventors of the present application have attempted to obtain the optimized shape of an automotive component subjected to a compressive load in the longitudinal direction to enhance crashworthiness of the automotive component by the method of Patent Literature **1.** However, the optimized shape of the obtained automotive component does not necessarily enhance crashworthiness. This is because the optimization analysis process that has set maximization of stiffness and minimization of stress etc. as objectives is appropriate as an index for determining the stiffness, but stiffness is not necessarily correlated with crashworthiness. Therefore, in particular, the method described in Patent Literature 1 cannot obtain the optimized shape for enhancing the crashworthiness of an automotive component subjected to a compressive load in the longitudinal direction, having a problem of not being able to design the automotive component.

The present invention has been made to solve the above problems, and one object of the present invention is to provide an automotive component designing method, an automotive component designing device, and an automotive component designing program capable of designing the automotive component subjected to a compressive load in a longitudinal direction at the time of collision of the automobile so as to enhance crashworthiness of the automotive component. Furthermore, another object of the present invention is to provide an automotive component manufacturing method capable of enhancing crashworthiness of the automotive component subjected to a compressive load in a longitudinal direction at the time of collision of the automobile.

Solution to Problem

An automotive component designing method according to the present invention, being a method of designing an automotive component, being a component subjected to a compressive load in a longitudinal direction at a time of collision of an automobile, the designing being performed so as to enhance crashworthiness of the automotive component, includes steps to be executed by a computer, the steps including: an automotive component model acquisition step of acquiring an automotive component model obtained by modeling the automotive component; a design space setting step of setting a design space in a design target portion, being a portion as a design target, in the acquired automotive component model; a design target portion model generation step of generating a design target portion model that performs an optimization analysis process on the design space that has been set; an optimization analysis condition setting step of setting optimization analysis conditions including a loading condition of inputting a compressive load in a longitudinal direction of the automotive component model, objectives that maximize a buckling load in a primary buckling mode obtained by a linear buckling analysis, and predetermined constraints related to the design target portion model; an optimization analysis step of performing an optimization analysis for obtaining an optimized shape of the design target portion model generated in the automotive component model under the optimization analysis conditions; and a design target portion shape determination step of determining a shape of the design target portion based on the optimized shape of the design target portion model.

In the optimization analysis condition setting step, preferably, the objectives are set as maximization of a minimum eigenvalue among eigenvalues that are solutions of an eigenequation indicated in the following Formula (1).

$$([K_E] + \lambda[K_G])\{\Delta\delta\} = \{0\} \qquad \cdots (1)$$

$\lambda$ :      Eigenvalue

$[K_E]$ :      Stiffness matrix

$[K_G]$ :      Initial stress matrix (geometric stiffness matrix)

$\{\Delta\delta\}$ :      Eigenmode/natural mode

It is desired that a stiffened member that reinforces the automotive component is attached to the automotive component so as to enhance crashworthiness, the design space setting step sets a two-dimensional space along a surface of the automotive component model as a design space, the design target portion model generation step generates a design target portion model by modeling the design space using a shell element, and connects the design target portion model with the automotive component model, and the design target portion shape determination step determines a shape and a position of the stiffened member to be attached to the automotive component based on the optimized shape of the design target portion model in the automotive component model.

It is desired that the design space setting step sets the design space with the automotive component model itself targeted as the design target portion.

It is desired that the optimization analysis step implements topology optimization as the optimization analysis to obtain the optimized shape of the design target portion model.

It is desired that the optimization analysis step implements plate thickness optimization as optimization analysis of the design target portion model, and obtains a plate thickness distribution of the design target portion model obtained by the plate thickness optimization, as the optimized shape of the design target portion model.

It is desired that the optimization analysis condition setting step sets the loading condition based on a load that is input in a longitudinal direction of the automotive component obtained in advance by a collision analysis targeted for all or a part of the automobile including the automotive component as an analysis target.

An automotive component designing device according to the present invention, being a device of designing an automotive component, being a component subjected to a compressive load in a longitudinal direction at a time of collision of an automobile, the designing being performed so as to enhance crashworthiness of the automotive component, includes: an automotive component model acquisition unit that acquires an automotive component model obtained by modeling the automotive component; a design space setting unit that sets a design space in a design target portion, being a portion as a design target, in the acquired automotive component model; a design target portion model generation unit that generates a design target portion model that performs an optimization analysis process on the design space that has been set; an optimization analysis condition setting unit that sets optimization analysis conditions including a loading condition of inputting a load in a longitudinal direction of the automotive component model, objectives that maximize a buckling load in a primary buckling mode obtained by a linear buckling analysis regarding the automotive component model, and predetermined constraints related to the design target portion model; an optimization analysis unit that performs an optimization analysis regarding the automotive component model for which the design target portion model has been generated, under the optimization analysis conditions so as to obtain an optimized shape of the design target portion model; and a design target portion shape determination unit that determines a shape of the design target portion based on the optimized shape of the design target portion model.

An automotive component designing program according to the present invention, being a program of designing an automotive component, being a component subjected to a compressive load in a longitudinal direction at a time of collision of an automobile, the designing being performed so as to enhance crashworthiness of the automotive component, causes a computer to function as units including : an automotive component model acquisition unit that acquires an automotive component model obtained by modeling the automotive component; a design space setting unit that sets a design space in a design target portion, being a portion as a design target, in the acquired automotive component model; a design target portion model generation unit that generates a design target portion model that performs an optimization analysis process on the design space that has been set; an optimization analysis condition setting unit that sets optimization analysis conditions including a loading condition of inputting a load in a longitudinal direction of the automotive component model, objectives that maximize a buckling load in a primary buckling mode obtained by a linear buckling analysis regarding the automotive component model, and predetermined constraints related to the design target portion model; an optimization analysis unit that executes an optimization analysis of obtaining an optimized shape of the design target portion model under the optimization analysis conditions ; and a design target portion shape determination unit that determines a shape of the design target portion based on the optimized shape of the design target portion model.

An automotive component manufacturing method according to the present invention, being a method of manufacturing an automotive component, being a component subjected to a compressive load in a longitudinal direction at a time of collision of an automobile, the method being performed so as to enhance crashworthiness of the automotive component, includes: producing the stiffened member being a plate-shaped member by press forming in accordance with the shape of the stiffened member determined by the automotive component designing method according to the present invention; and attaching the produced plate-shaped stiffened member to the determined position of the stiffened member in the automotive component to manufacture the automotive component.

An automotive component manufacturing method according to the present invention, being a method of manufacturing an automotive component, being a component subjected to a compressive load in a longitudinal direction at a time of collision of an automobile, the method being performed so as to enhance crashworthiness of the automotive component, includes: manufacturing the automotive component based on the shape of the automotive component determined by the automotive component designing method according to the present invention.

Advantageous Effects of Invention

In the present invention, objectives that maximize the buckling load in the primary buckling mode are set in an optimization analysis for an automotive component subjected to a compressive load in the longitudinal direction at the time of collision of the automobile. This makes it possible to design an automotive component having excellent crashworthiness in a deformation mode of an axial crush in which performance is determined by a buckling load. Furthermore, according to the present invention, it is possible to manufacture an automotive component excellent in crashworthiness against a deformation mode of the axial crush.

Brief Description of Drawings

FIG. 1 is a block diagram illustrating a configuration of an automotive component designing device according to a first embodiment of the present invention.

FIG. 2 is a diagram illustrating an automotive component subjected to a compressive load in a longitudinal direction at the time of collision of an automobile, which is a target of the present invention.

FIG. 3 is a diagram illustrating a rectangular cylindrical automotive component model simulating an automotive component subjected to a compressive load in a longitudinal direction at the time of collision of an automobile, provided as an example of study target in the background of the present invention.

FIG. 4 is an example of a graph of a load-stroke curve when a load is input in a longitudinal direction of a rectangular cylindrical automotive component model.

FIG. 5 is a diagram illustrating a rectangular cylindrical automotive component model used for comparison of a relationship between stiffness and a loading capacity/load bearing capacity in the background of the present invention: ((a) An automotive component model leaving a bent ridge line section of a rectangular cylindrical automotive component model; and (b) An automotive component model leaving a plane portion of a rectangular cylindrical automotive component model).

FIG. 6 is a graph obtained by plotting a load-stroke curve and a buckling load obtained by linear buckling analysis in a case where a compressive load is input in the longitudinal direction to each of a rectangular cylindrical automotive component model leaving a bent ridge line section and a rectangular cylindrical automotive component model leaving a plane portion in the background of the present invention.

FIG. 7 is a flowchart illustrating a flow of processing in the method of designing an automotive component according to the first embodiment of the present invention.

FIG. 8 is a diagram illustrating an optimized shape of a design target portion model obtained by topology optimization that sets a two-dimensional space along a surface of an automotive component model as a design space to generate the design target portion model in the Implementation example 1: ((a) Invention example 1; and (b) Comparative example 1).

FIG. 9 is a graph of a load-stroke curve of an automotive component model in which an optimized shape of a design target portion model obtained by topology optimization that sets a design space in a two-dimensional space along a surface to generate the design target portion model is pasted in the automotive component model in Implementation example 1: ((a) Invention example 1; and (b) Comparative example 1).

FIG. 10 is a diagram illustrating an optimized shape of a design target portion model obtained by topology optimization that sets an automotive component model itself as a design target portion in the second implementation example: ((a) Invention example 2 and (b) Comparative example 2).

FIG. 11 is a graph of a load-stroke curve of an optimized shape of an automotive component model obtained by topology optimization using the automotive component model itself as a design target portion in the second implementation example: ((a) Invention example 2; and (b) Comparative example 2).

Description of Embodiments

Before describing the automotive component designing method, the automotive component designing device, and the automotive component designing program according to the first embodiment of the present invention, and the automotive component manufacturing method according to the second embodiment, an automotive component as a target of the present invention and the background of the present invention will be described.

<Automotive component>

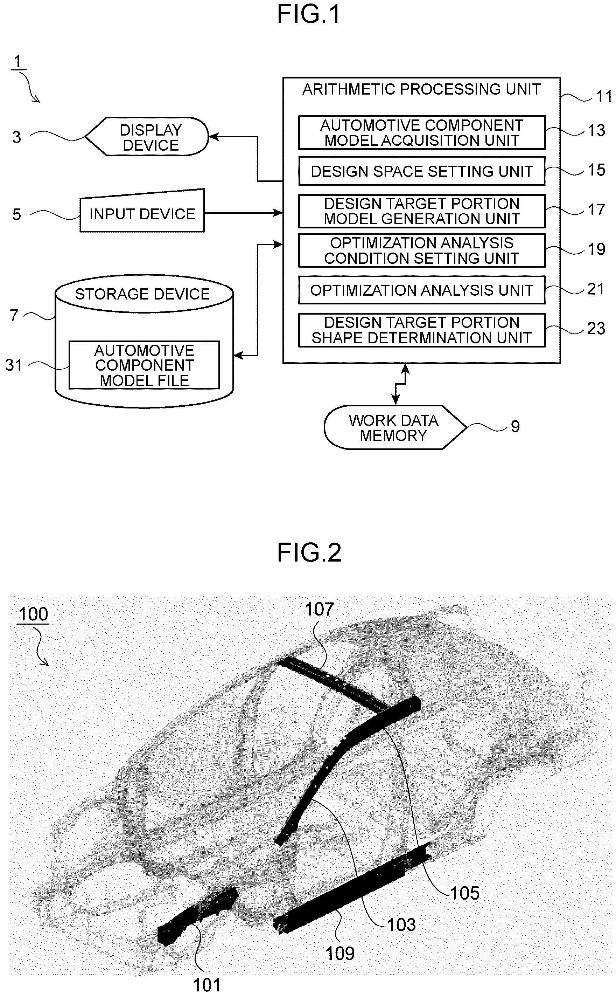

An automotive component to be the target of the present invention is assumed to be subjected to a compressive load in a longitudinal direction at the time of collision of an automobile. Such an automotive component includes, for example, a front side member 101, an upper front pillar/front pillar upper 103, a roof rail 105, etc. in an automotive body 100 illustrated in FIG. 2 at the time of a front collision. In addition, examples also include a roof center cross member 107 at the time of side collision, a side sill 109 at the time of small lap collision, etc. These automotive components include one component or a plurality of components (for example, the side sill 109 includes a side sill outer and a side sill inner). In addition, the present invention is not limited to an automotive component including one component or a plurality of components, and an automotive component reinforced by attaching a stiffened member to enhance crashworthiness is also a design target.

As will be described below, the present invention obtains, by optimization analysis, an optimized shape of these automotive components capable of enhancing crashworthiness against a compressive load that is input in the longitudinal direction. Therefore, it is assumed that the automotive component is modeled by a shell element and/or a solid element, and element information, material property, etc. of the modeled automotive component model are assumed to be stored in an automotive component model file 31 (FIG. 1) to be described below.

<Background of the invention>

In order to obtain an optimized shape of an automotive component by optimization analysis for the purpose of enhancing crashworthiness of the automotive component, there is a need to appropriately set objectives in the optimization analysis. In the conventional optimization analysis, as described above, the optimized shape of the automotive component is obtained by setting the maximization of the stiffness, the minimization of displacement and stress, and the minimization of strain energy as the objectives. In addition, the automotive component having high crashworthiness refers to an automotive component having high yield strength against a load input in an assumed direction at the time of collision of the automobile, that is, having high loading capacity/load bearing capacity.

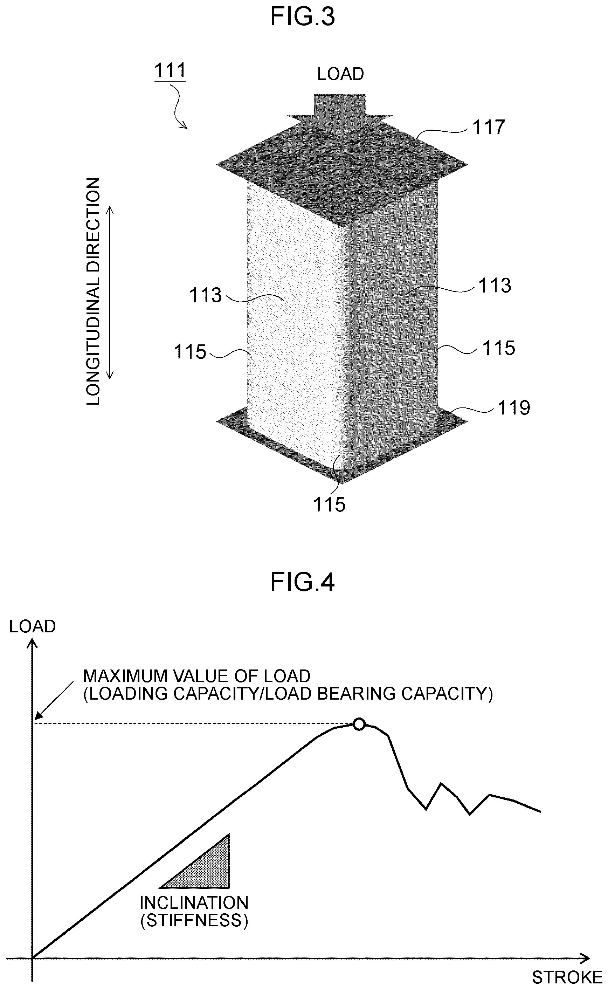

FIG. 3 illustrates, as an example, an automotive component model 111 obtained by modeling an automotive component subjected to a compressive load in the longitudinal direction. It is assumed that the automotive component model 111 is formed in a rectangular cylindrical shape by a plane portion 113 and a bent ridge line section 115, and includes a flat plate 117 and a flat plate 119 each provided at each of both ends in the longitudinal direction.

The relationship between the yield strength and the stiffness when the automotive component model 111 is subjected to a compressive load in the longitudinal direction is expressed using a load-stroke curve illustrated in FIG. 4 below. The load-stroke curve illustrated in FIG. 4 is a graph illustrating the relationship between a longitudinal direction displacement (stroke) of the flat plate 117 and the load input to the automotive component model 111, in the automotive component model 111 in which the flat plate 117 provided at one end in the longitudinal direction has been subjected to a compressive load. In FIG. 4, the inclination of the load-stroke curve in the elastic deformation phase in which the load and the stroke are represented by a linear relationship is the stiffness of the automotive component model 111, while the maximum load in the plastic deformation phase beyond the elastic deformation phase in the load-stroke curve is the yield strength (loading capacity/load bearing capacity) of the automotive component model 111.

As illustrated in FIG. 4, in order to accurately calculate the loading capacity/load bearing capacity of the automotive component model in the plastic deformation phase beyond the elastic deformation phase by finite-element method (FEM) analysis or the like, there is a need to execute time incremental calculation of obtaining a temporal change in the relationship between the load and the stroke (displacement of the load input point in the automotive component model). However, such time incremental calculation requires much longer calculation time than linear calculation (static analysis) of obtaining the stiffness of the automotive component model.

Furthermore, the optimization analysis of obtaining the optimized shape that allows the automotive component model to satisfy predetermined performance (objectives) requires iterative calculation. Accordingly, when maximization of the loading capacity/load bearing capacity of the automotive component model is set as objectives in the optimization analysis, there is a need to obtain the loading capacity/load bearing capacity by performing time incremental calculation in each step of iterative calculation. However, performing such iterative calculation in the optimization analysis is not realistic in terms of calculation time.

In view of this, in the conventional optimization analysis (for example, Patent Literature 1 described above), even in the case of aiming at enhancing the crashworthiness of automotive components, the maximization of the stiffness has been set as the objectives from the viewpoint of the calculation time. Such an optimization analysis has been effective in a case of obtaining an optimized shape of an automotive component model in which the loading capacity/load bearing capacity increases in accordance with the stiffness.

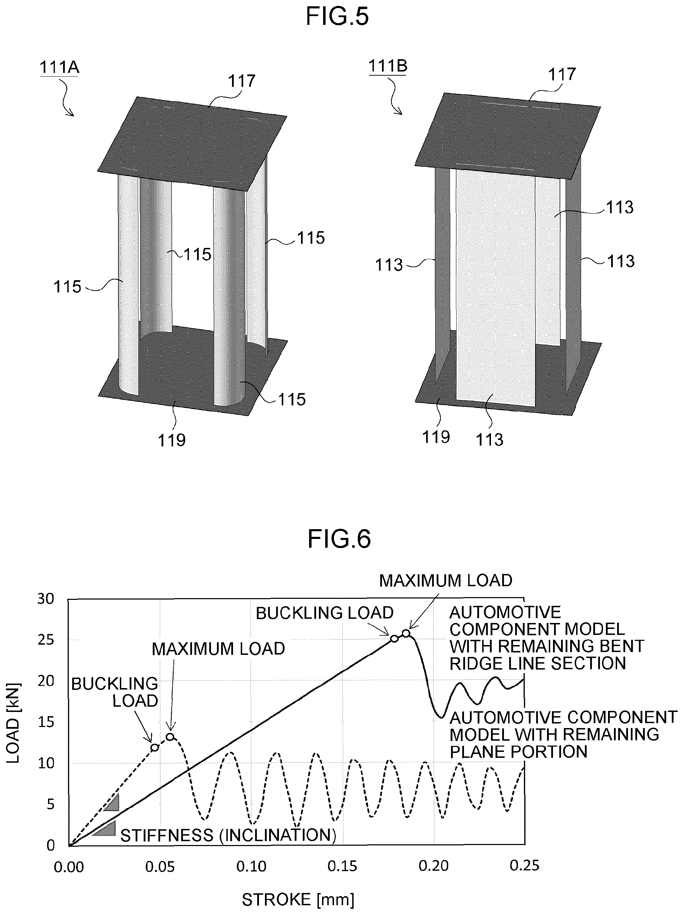

However, for example, in an automotive component model 111A illustrated in FIG. 5(a) and an automotive component model 111B illustrated in FIG. 5(b), it has been found that there is no correspondence between the stiffness and the loading capacity/load bearing capacity when a compressive load is applied in the longitudinal direction.

The automotive component model 111A has a shape in which the plane portion 113 is removed and the bent ridge line section 115 is left in the rectangular cylindrical automotive component model 111 illustrated in FIG. 3. On the other hand, the automotive component model 111B has a shape in which the bent ridge line section 115 is removed and the plane portion 113 is left in the rectangular cylindrical automotive component model 111 illustrated in FIG. 3.

FIG. 6 illustrates a graph comparing the relationships of a load and a stroke (load-stroke curves) when a compressive load is input in the longitudinal direction, which has been obtained for each of the automotive component model 111A and the automotive component model 111B.

In the automotive component model 111A that leaves the bent ridge line section 115, as compared with the automotive component model 111B that leaves the plane portion 113, the inclination (stiffness) of the elastic region in the load-stroke curve (solid line in FIG. 6) is small, but the maximum load is large. In contrast, in the automotive component model 111B that leaves the plane portion 113, as compared with the automotive component model 111A that leaves the bent ridge line section 115, the inclination (stiffness) of the elastic deformation phase in the load-stroke curve (solid line in FIG. 6) is large, but the maximum load is small.

Therefore, when optimization analysis is performed on the automotive component model 111 (FIG. 3) with maximization of stiffness as objectives, a shape with high stiffness as in the automotive component model 111B has been obtained, but a shape with high loading capacity/load bearing capacity as in the automotive component model 111A has not been obtained.

Therefore, the inventors have intensively studied such a problem. In this study, the inventors have focused on a load (= buckling load) at the time of buckling of an automotive component that undergoes axial crush after being subjected to a compressive load in the longitudinal direction.

The crashworthiness of an automotive component can be evaluated by a maximum value of load (loading capacity/load bearing capacity) input to the automotive component, but at the point where the load becomes the maximum value, a deformation mode due to buckling occurs in the automotive component in many cases. In particular, when gradually increasing the compressive load input in a longitudinal direction in an automotive component having a complicated shape, the deformation mode is changed by buckling at an initial stage of deformation to cause continuous buckling, allowing the deformation of the automotive component to progress. At a point of time when the compressive load input to the automotive component becomes maximum (maximum load), the automotive component is in a larger deformation mode.

In this manner, it is difficult to predict the state of the large deformation mode by linear calculation (static analysis) of obtaining the stiffness of the automotive component. On the other hand, in an automotive component to which a compressive load is input in the longitudinal direction, a limit load (= a buckling load) when the axial compression mode is changed to another deformation mode such as a bending mode can be obtained by a linear buckling analysis.

The linear buckling analysis is a static analysis of obtaining balance between a load and a displacement before occurrence of buckling under a certain loading condition, and specifically, the buckling load is obtained as follows. Considering a case where a load increment is given to a state in which the automotive components obtained by the static analysis are balanced, a stiffness equation for the load increment is obtained from the principle of virtual work as indicated in the following Formula (2).

$$([K_E] + [K_G])\{\Delta\delta\} = \{\Delta F\} \qquad \cdots (2)$$

$\{\Delta\delta\}$ represents a nodal displacement increment vector, $\{\Delta F\}$ represents a load increment vector, $[K_E]$ represents a stiffness matrix, and $[K_G]$ represents an initial stress matrix (geometric stiffness matrix). The initial stress matrix $[K_G]$ is a matrix generated from a stress state before buckling, and can be generated, for example, by a method described in the following reference material.

(Reference material) Tadahiko Kawai, "Computer Based Structural Engineering Course II-6-B Buckling Problem Analysis", edited by The Japan Society of Steel Construction, published by Baifukan, October 1974, p.52-67.

When the automotive component is buckled under a loading condition of a load of λ times the load in a balanced stress state, $\{\Delta F\}$ may be set to 0, and thus Formula (3) is obtained from the relationship of Formula (2).

$$([K_E] + \lambda[K_G])\{\Delta\delta\} = \{0\} \qquad \cdots (3)$$

λ : Eigenvalue

$[K_E]$ : Stiffness matrix

$[K_G]$ : Initial stress matrix (geometric stiffness matrix)

$\{\Delta\delta\}$ : Eigenmode/natural mode

Formula (3) is a generalized eigenvalue problem, and by solving the generalized eigenvalue problem by numerical analysis, the eigenvalue $\{\lambda\}$ and the corresponding eigenmode/natural mode $\{\Delta\delta\}$ can be obtained.

The smallest eigenvalue λ among the eigenvalues $\{\lambda\}$ is a load factor that gives a load at the time of occurrence of buckling with respect to a load in a balanced stress state. Accordingly, a value calculated by multiplying the input load under the loading condition when having obtained $\{K_G\}$ by the smallest eigenvalue λ will be the initial buckling load.

In this manner, the linear buckling analysis is an analysis method in which an equilibrium equation at the time of buckling is derived from the principle of virtual work and that treats the problem as a generalized eigenvalue problem, making it unnecessary to perform time incremental calculation of obtaining temporal changes of a load and a stroke.

FIG. 6 described above illustrates a result of plotting, on a load-stroke curve, a buckling load obtained by linear buckling analysis for each of the automotive component model 111A (FIG. 5 (a)) and the automotive component model 111B (FIG. 5 (b)). As illustrated in FIG. 6, it can be seen that the buckling load obtained by the linear buckling analysis is not correlated with the stiffness but correlated with the maximum load in both the automotive component model 111A and the automotive component model 111B.

Based on the above study, the inventors have conceived to perform an optimization analysis of obtaining an optimized shape of an automotive component in a deformation mode in which the automotive component undergoes axial crush after being subjected to a compressive load in a longitudinal direction, with maximization of a buckling load obtained by linear buckling analysis as objectives. This optimization analysis has revealed that it is possible to design an automotive component subjected to a compressive load in the longitudinal direction so as to enhance crashworthiness of the automotive component without requiring a large amount of calculation time. The present invention has been made based on such findings, and specific configurations thereof are as described below.

[First embodiment]

<Automotive component designing device>

An automotive component designing device according to a first embodiment of the present invention (hereinafter, referred to as an "automotive component designing device") designs an automotive component subjected to a compressive load in a longitudinal direction at the time of collision of the automobile so as to enhance crashworthiness of the automotive component. As illustrated in FIG. 1 as an example, an automotive component designing device 1 is constituted by a PC or the like, and includes a display device 3, an input device 5, a storage device 7, work data memory 9, and an arithmetic processing unit 11. The display device 3, the input device 5, the storage device 7, and the work data memory 9 are connected to the arithmetic processing unit 11, and each function is executed by a command from the arithmetic processing unit 11. Hereinafter, individual configurations in the automotive component designing device 1 will be described.

The display device 3 is used for displaying an analysis result or the like, and includes a liquid crystal monitor or the like. The input device 5 is used for instructing the display of an automotive component model file 31, or for inputting conditions by an operator, etc., and includes a keyboard, a mouse, and the like. The storage device 7 is used for storing various files such as the automotive component model file 31, and is constituted by a hard disk or the like. The work data memory 9 is used for temporary storage and calculation of data used by the arithmetic processing unit 11, and includes Random Access Memory (RAM) or the like.

As illustrated in FIG. 1, the arithmetic processing unit 11 includes an automotive component model acquisition unit 13, a design space setting unit 15, a design target portion model generation unit 17, an optimization analysis condition setting unit 19, an optimization analysis unit 21, and a design target portion shape determination unit 23. The arithmetic processing unit 11 is constituted by a central processing unit (CPU) such as a PC, and the above-described respective units function when the CPU executes a predetermined program. In the first embodiment, an automotive component to which a stiffened member is attached so as to enhance crashworthiness is defined as a design target, and each portion of the automotive component designing device 1 will be described.

<<Automotive component model acquisition unit>>

The automotive component model acquisition unit 13 acquires an automotive component model obtained by modeling an automotive component (refer to FIG. 2) subjected to a compressive load in the longitudinal direction at the time of collision of the automobile.

In the designing device for an automotive component according to the first embodiment, a stiffened member that reinforces the automotive component is attached to the automotive component to be designed so as to enhance crashworthiness. The automotive component model acquisition unit 13 acquires an automotive component model obtained by modeling the automotive component using a shell element and/or a solid element.

<<Design space setting unit>>

The design space setting unit 15 sets a design space at a design target portion to be set as a design target in the automotive component model acquired by the automotive component model acquisition unit 13. In the first embodiment, the design space setting unit 15 sets a two-dimensional space along a surface of the automotive component model as a design space.

<<Design target portion model generation unit>>

The design target portion model generation unit 17 generates a design target portion model that performs an optimization analysis process on the design space set by the design space setting unit 15. In the first embodiment, the design target portion model generation unit 17 divides a design space set in a two-dimensional space along a surface of an automotive component model into elements using shell elements to generate the design target portion model.

The design target portion model generation unit 17 connects the generated design target portion model with the automotive component model. For connecting between the design target portion model and the automotive component model, for example, a node of the design target portion model and a node of the automotive component model are desirably connected (rigid joint or elastic joint) by an element (rigid body element, elastic body element, or elastic-plastic body element). Alternatively, the design target portion model and the automotive component model may be connected to each other by sharing the node of the design target portion model and the node of the automotive component model. In addition, in accordance with the material of the stiffened member that reinforces the automotive component, the plate thickness when the stiffened member has a plate shape, etc., the design target portion model generation unit 17 sets the material property, the plate thickness, etc. of the generated design target portion model.

<<Optimization analysis condition setting unit>>

The optimization analysis condition setting unit 19 sets a loading condition, objectives, and a predetermined constraint condition as optimization analysis conditions for the automotive component model for which the design target portion model has been generated.

The loading condition is a condition of inputting a compressive load in the longitudinal direction with respect to the automotive component model for which the design target portion model has been generated. In the first embodiment, the optimization analysis condition setting unit 19 sets a loading condition of inputting a predetermined load in the longitudinal direction of the automotive component model 111 to the flat plate 117 provided at the distal end in the longitudinal direction of the automotive component model 111 (refer to FIG. 3).

The loading condition includes a magnitude and a direction of an input load, a load input point, etc. The loading condition is preferably set based on the compressive load input in the longitudinal direction of the automotive component obtained in advance by a collision analysis in which all or a part of the automobile including the automotive component subjected to the compressive load in the longitudinal direction is defined as an analysis target.

Furthermore, the optimization analysis condition setting unit 19 desirably sets a constraint condition for constraining the displacement of the automotive component model in addition to the loading condition. As the constraint condition, it is preferable to set, for example, a condition of constraining the displacement of the flat plate 119 provided at the distal end on the opposite side to the flat plate 117, which is a load input point to which a load is input, as the rectangular cylindrical automotive component model 111 illustrated in FIG. 3.

The objectives are to maximize the buckling load of the primary buckling mode obtained by the linear buckling analysis. In the first embodiment, the objectives are maximization of the minimum eigenvalue among the eigenvalues $\lambda$ that are solutions of the eigenequation expressed by the above-described Formula (3).

The constraint condition imposes a predetermined constraint on the design target portion model in the optimization analysis, and it is desirable to set, for example, a volume constraint ratio (ratio to the volume of the entire design space) of the design target portion model.

<<Optimization analysis unit>>

Under the optimization analysis conditions set by the optimization analysis condition setting unit 19, the optimization analysis unit 21 performs optimization analysis on the automotive component model for which the design target portion model is generated, and obtains an optimized shape of the design target portion model.

The optimization analysis unit 21 can apply topology optimization, for example, for optimization analysis. In addition, in a case where there is a large intermediate density when the density method (densimetry) is used in topology optimization, it is preferable to perform discretization by giving a penalty coefficient/penalty factor as an optimized parameter. The value of the penalty coefficient/penalty factor can be appropriately set.

In the first embodiment, the optimized shape of the design target portion model is obtained by the remaining and erasing states of shell elements constituting the design target portion model so as to satisfy the optimization analysis condition set by the optimization analysis condition setting unit 19.

The optimization analysis by the optimization analysis unit 21 can also be performed by, for example, analysis software using a commercially available finite element method.

<<Design target portion shape determination unit>>

The design target portion shape determination unit 23 determines the shape of the design target portion based on the optimized shape of the design target portion model obtained by the optimization analysis unit 21.

In the first embodiment, the design target portion shape determination unit 23 determines, as the shape of the plate-shaped stiffened member to be attached in the automotive component model, a remaining shape obtained by the remaining and erasing states of the shell element generated by the topology optimization analysis process on the design target portion model modeled by the shell element.

The plate-shaped stiffened member is desirably produced by press forming, for example, and thus, the design target portion shape determination unit 23 desirably transforms the shape determined as the plate-shaped stiffened member into a shape that can be produced by press forming. For example, the design target portion shape determination unit 23 desirably performs smoothing on contour irregularities of the shape determined for the plate-shaped stiffened member in consideration of the blank workability of the plate-shaped stiffened member. Furthermore, in a case where the shapes that have been remaining by the optimization analysis process are scattered in a certain range region, the design target portion shape determination unit 23 desirably replaces the shapes with the shape of one plate-shaped stiffened member having the same weight and the same position of center of gravity.

Furthermore, in the first embodiment, the design target portion shape determination unit 23 determines the position to which the plate-shaped stiffened member in the automotive component is to be attached based on the shape determined or transformed for the stiffened member to be attached to the automotive component.

<Automotive component designing method>

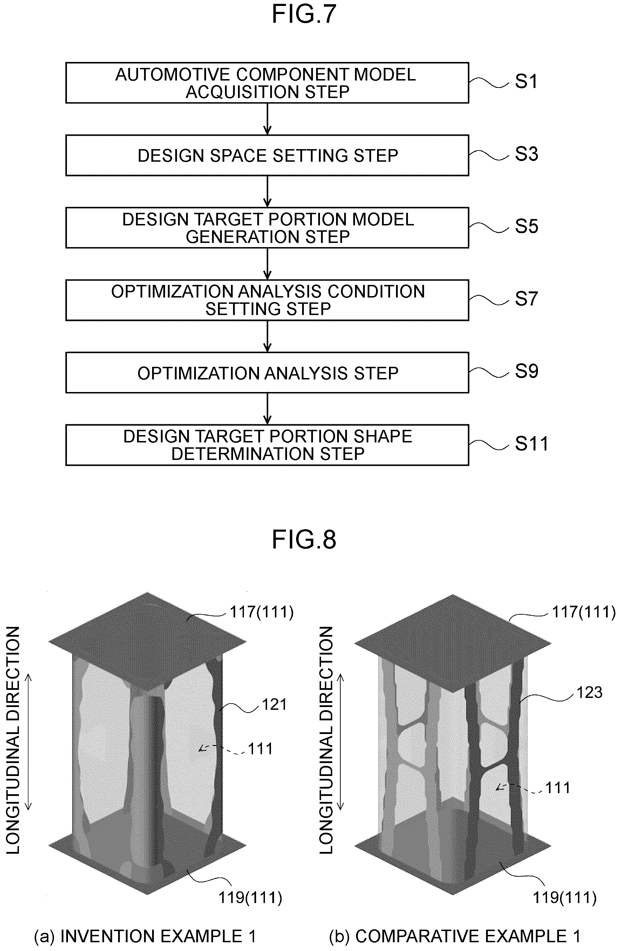

An automotive component designing method according to the first embodiment of the present invention is a method of designing an automotive component subjected to a compressive load in a longitudinal direction at the time of collision of the automobile so as to enhance crashworthiness of the automotive component. As illustrated in FIG. 7, the automotive component designing method according to the present embodiment includes an automotive component model acquisition step S1, a design space setting step S3, and a design target portion model generation step S5. Furthermore, as illustrated in FIG. 7, the automotive component designing method according to the present embodiment includes an optimization analysis condition setting step S7, an optimization analysis step S9, and a design target portion shape determination step S11. In the method of designing an automotive component according to the first embodiment, these steps are executed by a computer. Hereinafter, the first embodiment defines an automotive component to which a stiffened member is attached so as to enhance crashworthiness as a design target, and each step described above will be described.

<<Automotive component model acquisition step>>

The automotive component model acquisition step S1 is a step of acquiring an automotive component model obtained by modeling an automotive component (refer to FIG. 2) subjected to a compressive load in the longitudinal direction at the time of collision of the automobile. In the first embodiment, the automotive component model acquisition step S1 is executed by the automotive component model acquisition unit 13 of the automotive component designing device 1. Subsequently, the automotive component model acquisition step S1 acquires an automotive component model obtained by modeling the automotive component using the shell element and/or the solid element.

<<Design space setting step>>

The design space setting step S3 is a step of setting a design space in a design target portion to be a design target in the automotive component model acquired in the automotive component model acquisition step S1. In the first embodiment, the design space setting step S3 is executed by the design space setting unit 15 of the automotive component designing device 1. Subsequently, the design space setting step S3 sets a two-dimensional space along the surface of the automotive component model, as a design space.

<<Design target portion model generation step>>

The design target portion model generation step S5 is a step of generating a design target portion model that performs optimization analysis process on the design space that has been set in the design space setting step S3. In the first embodiment, the design target portion model generation step S5 is executed by the design target portion model generation unit 17 of the automotive component designing device 1. Subsequently, the design target portion model generation step S5 generates a design target portion model by dividing a design space set in a two-dimensional space along a surface of an automotive component model into elements using shell elements.

Furthermore, the design target portion model generation step S5 connects the generated design target portion model with the automotive component model. The connection between the design target portion model and the automotive component model desirably uses, for example, a connection of a node of the design target portion model and a node of the automotive component model (rigid joint or elastic joint) by an element (rigid body element, elastic body element or elastic-plastic body element). Alternatively, the design target portion model and the automotive component model may be connected to each other by sharing the node of the design target portion model and the node of the automotive component model.

In addition, in accordance with the material of the stiffened member that reinforces the automotive component, the plate thickness when the stiffened member has a plate shape, etc., the design target portion model generation step S5 sets the material property, the plate thickness, etc. of the generated design target portion model.

<<Optimization analysis condition setting step>>

The optimization analysis condition setting step S7 is a step of setting optimization analysis conditions including a loading condition of inputting a compressive load in the longitudinal direction of the automotive component model, objectives that maximize the buckling load in the primary buckling mode obtained by the linear buckling analysis, and a predetermined constraint condition related to the design target portion model. In the first embodiment, the optimization analysis condition setting step S7 is executed by the optimization analysis condition setting unit 19 of the automotive component designing device 1. In addition, the optimization analysis condition setting step S7 sets each of the loading condition, the objectives, and the constraint condition similarly to the optimization analysis condition setting unit 19 of the automotive component designing device 1.

The loading condition is preferably set based on the load input in the longitudinal direction of the automotive component model obtained in advance by a collision analysis in which all or a part of the automobile including the automotive component model subjected to the compressive load in the longitudinal direction is defined as an analysis target.

In addition, in the optimization analysis condition setting step S7, similarly to the optimization analysis condition setting unit 19 of the automotive component designing device 1 described above, a constraint condition for constraining the displacement of the automotive component model is desirably set in addition to the loading condition.

<<Optimization Analysis Step>>

The optimization analysis step S9 is a step of performing an optimization analysis of obtaining an optimized shape of the design target portion model generated in the automotive component model under the optimization analysis condition that has been set in the optimization analysis condition setting step S7. In the first embodiment, the optimization analysis step S9 is executed by the optimization analysis unit 21 of the automotive component designing device 1.

The optimization analysis in the optimization analysis step S9 can apply topology optimization, for example. In a case where the intermediate density is large when the densimetry is used in the topology optimization, it is preferable to perform discretization by giving a penalty coefficient as an optimized parameter. The value of the penalty coefficient/penalty factor can be appropriately set.

In the first embodiment, the optimized shape of the design target portion model is obtained by remaining and erasing of shell elements constituting the design target portion model so as to satisfy the optimization analysis condition that has been set in the optimization analysis condition setting step S7.

The optimization analysis in the optimization analysis step S9 can also be performed by, for example, analysis software using a commercially available finite element method.

<<Design target portion shape determination step>>

The design target portion shape determination step S11 determines the shape of the design target portion based on the optimized shape of the design target portion model obtained in the optimization analysis step S9. In the first embodiment, the design target portion shape determination step S11 is executed by the design target portion shape determination unit 23 of the automotive component designing device 1.

The first embodiment determines, as the shape of the plate-shaped stiffened member to be attached in the automotive component model, a remaining shape obtained by the remaining and erasing states of the shell element by the topology optimization analysis process on the design target portion model modeled by the shell element.

The plate-shaped stiffened member is desirably produced by press forming, for example, and thus, the design target portion shape determination step S11 desirably transforms the shape determined as the plate-shaped stiffened member into a shape that can be produced by press forming. For example, the contour irregularities of the shape determined for the plate-shaped stiffened member desirably undergo smoothing in consideration of the blank workability of the plate-shaped stiffened member. Furthermore, in a case where the shapes that have been remaining by the optimization analysis process are scattered in a certain range region, the shapes are desirably replaced with the shape of one plate-shaped stiffened member having the same weight and the same position of center of gravity.

Furthermore, in the first embodiment, in the design target portion shape determination step S21, the position to which the plate-shaped stiffened member is attached in the automotive component is determined based on the determined or transformed shape of the stiffened member to be attached to the automotive component.

<Automotive component designing program>

The above description of the first embodiment relates to an automotive component designing device and method. Additionally, the first embodiment can be configured as an automotive component designing program that allows for functions of individual units in the arithmetic processing unit 11 of the automotive component designing device 1 (FIG. 1) constituted by a computer.

An automotive component designing program according to the first embodiment of the present invention is a method of designing an automotive component so as to enhance crashworthiness of the automotive component subjected to a compressive load in a longitudinal direction at the time of collision of the automobile. In addition, the automotive component designing program according to the first embodiment causes the computer to function as the automotive component model acquisition unit 13, the design space setting unit 15, the design target portion model generation unit 17, the optimization analysis condition setting unit 19, the optimization analysis unit 21, and the design target portion shape determination unit 23 as in the arithmetic processing unit 11 illustrated in FIG. 1.

As described above, in the device, the method, and the program used in designing an automotive component according to the first embodiment, optimization analysis is performed to obtain an optimized shape of a stiffened member that reinforces an automotive component subjected to a compressive load in a longitudinal direction at the time of collision of the automobile so as to enhance crashworthiness. The optimization analysis sets objectives that maximize the buckling load in the primary buckling mode. This makes it possible to design an automotive component reinforced by the stiffened member so as to enhance crashworthiness in the deformation mode of axial crush in which the buckling load determines the performance.

The first embodiment described above determines the optimized shape and position of a stiffened member to be attached and reinforced in order to enhance crashworthiness for an automotive component against a compressive load input in a longitudinal direction at the time of collision of the automobile, thereby designing the automotive component.

Additionally, another aspect of the first embodiment may determine the shape of the automotive component itself so as to enhance crashworthiness of the automotive component subjected to a compressive load in the longitudinal direction, and may thereby design the automotive component.

For example, in a method of designing an automotive component according to the another aspect of the first embodiment, the shape of the automotive component is desirably determined by the following procedure.

First, in the design space setting step, the design space is set with the automotive component model itself as a design target portion.

Next, in the design target portion model generation step, the design target portion model is generated using the shell element and/or the solid element. At this time, the design target portion model may be generated using the shell element and/or the solid element used for modeling the automotive component model.

In addition, the material property, the plate thickness, and the like of the generated design target portion model are set in accordance with the material of the automotive component to be designed, and in accordance with the plate thickness, etc. in a case where the automotive component is manufactured by performing press forming of a metal plate as described below.

Subsequently, in the optimization analysis condition setting step, an optimization analysis condition that maximizes the buckling load in the primary buckling mode as objectives is set for the automotive component model for which the design target portion model has been generated. In the optimization analysis condition setting step, the loading condition, the constraint condition, and the constraints are to be desirably set similarly to the first embodiment described above.

Subsequently, the optimization analysis is performed on the design target portion model under the set optimization analysis condition to obtain the optimized shape of the design target portion model.

Subsequently, the shape of the automotive component that is the design target portion is determined based on the optimized shape of the design target portion model.

When topology optimization is applied in optimization analysis, three-dimensional coordinate data of a remaining shape (element density distribution equal to or greater than a predetermined threshold) of a design target portion is input to a CAD/CAM program. Next, the shape of the automotive component is desirably determined by performing CAD processing such as smoothing processing and shape optimization processing in accordance with constraints at the time of actual manufacture of the automotive component.

Similarly, the device and the program used in designing an automotive component according to another aspect of the first embodiment may include designing to enhance the crashworthiness of the automotive component by obtaining the optimized shape of the automotive component itself subjected to a compressive load in the longitudinal direction. In this manner, also in the another aspect of the first embodiment, an automotive component subjected to a compressive load in the longitudinal direction can be designed so as to enhance crashworthiness in the deformation mode of axial crush in which the buckling load determines crashworthiness.

In the above description, topology optimization is performed as optimization analysis for obtaining an optimized shape of a design target portion model generated in an automotive component model. However, in the present invention, plate thickness optimization for obtaining an optimum plate thickness distribution of a design target portion model may be performed as optimization analysis. In this case, the shape of the design target portion in the automotive component model can be determined as follows.

In a case where the two-dimensional space along the surface of the automotive component model is set as the design space, the shape of the design target portion model, being a remaining portion after deleting a portion having a thickness less than a predetermined thickness in the optimal plate thickness distribution obtained by plate thickness optimization, is obtained as the optimized shape of the stiffened member to be attached to the automotive component. In this case, the predetermined plate thickness as a reference of deletion is desirably set appropriately in consideration of crashworthiness and weight.

In addition, when the design space is set using the automotive component model itself as a design target portion, a portion where the plate thickness obtained by the plate thickness optimization analysis is larger than the plate thickness of the original automotive component model is to be defined as a part to which the stiffened member is attached, and the shape of the part is desirably determined as the shape of the stiffened member. Alternatively, the shape of the design target portion may be determined by deleting a part where the plate thickness is equal to or less than a predetermined value as compared with the plate thickness of the automotive component model.

The automotive component model is not limited to a model obtained by modeling only an automotive component to be designed, and may be a model obtained by modeling other automotive components that are installed around the automotive component model but are not design targets.

[Second embodiment]

The automotive component designing method according to the first embodiment described above is a method of designing an automotive component so as to enhance crashworthiness of the automotive component subjected to a compressive load in a longitudinal direction at the time of collision of the automobile.

Additionally, the present invention can be configured to manufacture an automotive component subjected to a compressive load in a longitudinal direction at the time of collision of the automobile so as to enhance crashworthiness of the automotive component.

In the automotive component manufacturing method according to the second embodiment, first, the shape and position of the stiffened member to be attached to the automotive component are determined so as to enhance crashworthiness using the automotive component designing method according to the first embodiment described above. Subsequently, the plate-shaped stiffened member is produced by press forming in accordance with the determined shape of the stiffened member.

Furthermore, the produced plate-shaped stiffened member is attached to the position of the stiffened member determined for the automotive component so as to manufacture the automotive component. Specific examples of the forms of attaching the plate-shaped stiffened member to the automotive component include welding such as resistance spot welding, electric arc welding, and laser beam welding, adhesion using a structural adhesive, and a welding method combining spot welding and bonding.

In order to attach the plate-shaped stiffened member to the automotive component, first, position data of three-dimensional coordinates of the automotive component is obtained. Next, the obtained position data of the three-dimensional coordinates of the automotive component is transformed into assembly data. The assembly data is data (NC data) in a format used by an assembly robot in the manufacturing process of the automotive body, and the transformed assembly data is loaded onto the NC unit. Subsequently, using the NC unit on which the transformed assembly data has been loaded, component assembly for attaching the plate-shaped stiffened member to the automotive component is performed.

In this manner, with the automotive component manufacturing method according to the second embodiment, it is possible to manufacture an automotive component reinforced by the stiffened member so as to be subjected to a compressive load in the longitudinal direction at the time of collision of the automobile and enhance crashworthiness in the deformation mode of axial crush.

Furthermore, the automotive component manufacturing method according to another aspect of the second embodiment may be a method of manufacturing an automotive component based on the shape of the automotive component determined by the method of designing an automotive component according to the another aspect of the first embodiment described above.

When the shape of the automotive component is determined by the method of designing an automotive component according to the another aspect of the first embodiment, the automotive component can be manufactured by performing press forming on a metal plate as described below as an example.

First, CAD data of an automotive component is acquired based on the shape of the automotive component determined by the automotive component designing method according to the another aspect of the first embodiment.

Subsequently, CAD data of a tool of press forming is created based on the acquired CAD data of the automotive component, and a tool of press forming is created based on the created CAD data of the tool of press forming. Subsequently, an automotive component is manufactured using the created tool of press forming.

Specific examples of preparing the tool of press forming include the following. CAD data of the tool of press forming is input to a CAD/CAM program in cooperation with an NC machine tool, and transformed into NC data (NC program) for NC machining. The NC machine tool performs machining/machining operation on a mold model of a full mold casting method or a steel mold. Subsequently, using the acquired NC data (NC program), a mold model for casting or a steel mold is produced by an NC machine tool to create an actual tool of press forming.

According to the another aspect of the automotive component manufacturing method according to the second embodiment, it is possible to manufacture an automotive component whose shape is determined so as to enhance crashworthiness against a deformation mode such as axial crush after being subjected to a compressive load in the longitudinal direction.

Implementation examples

The following will describe the analysis that has been conducted for verifying the effect of enhancing the crashworthiness of an automotive component subjected to a compressive load in the longitudinal direction, the effect to be obtained by the automotive component designing method, the automotive component designing device, and the automotive component designing program according to the present invention.

<Implementation example 1: optimized shape of stiffened member for automotive component>

In Implementation example 1, an automotive component model 111 having a rectangular cylindrical shape and modeled by a shell element illustrated in FIG. 3 was used as an analysis target to obtain the optimized shape of the stiffened member for reinforcing the automotive component model 111.

The automotive component model 111 simulates an automotive component subjected to a compressive load in the longitudinal direction at the time of collision of an automobile, and is formed in a rectangular cylindrical shape by four plane portions 113 and a bent ridge line section 115 connecting adjacent plane portions 113. In addition, a flat plate 117 and a flat plate 119 are provided at both ends in the longitudinal direction of the automotive component model 111. The automotive component model 111 was made of a steel sheet having a rectangular cylinder side of 50 mm, a height of 100 mm, a sheet thickness of 1 mm, and a tensile strength of 1180 MPa.

The implementation example 1 includes Invention example 1, in which optimization analysis for obtaining an optimized shape of a stiffened member for enhancing crashworthiness of an automotive component against a compressive load input in a longitudinal direction was performed.

In the optimization analysis, first, an automotive component model 111 modeled by a shell element was acquired, and a two-dimensional space along surfaces of the plane portion 113 and the bent ridge line section 115 in the automotive component model 111 was set as a design space. Subsequently, a design target portion model was generated using shell elements for the set design space. Furthermore, the design target portion model and the automotive component model were connected to each other by sharing the node of the design target portion model and the node of the automotive component model.

Next, a loading condition and a constraint condition, and objectives and a constraint condition were set for the automotive component model 111 as optimization analysis conditions. The loading condition was a condition of inputting a load of 1 kN in the longitudinal direction to the flat plate 117 on one end side in the longitudinal direction, and the constraint condition was a condition of constraining the flat plate 119 on the other end side. The objectives maximize the eigenvalue of the primary buckling mode of the automotive component model, and the constraint condition is setting the volume of the design target portion model to 30% or less of the volume of the design space.

Subsequently, optimization analysis by topology optimization was performed under the set optimization analysis conditions, and the remaining design target portion model was obtained as an optimized shape of the stiffened member.

The implementation example 1 includes Comparative example 1, in which only the objectives among the optimization analysis conditions set in Invention example 1 was changed to "minimization of displacement of flat plate 117", and optimization analysis by topology optimization was performed to obtain the optimized shape of the design target portion model.

FIG. 8 illustrates optimized shapes of stiffened members obtained by optimization analysis in Invention example 1 and Comparative example 1. As illustrated in FIG. 8(a), an optimized shape 121 of the stiffened member in Invention example 1 was a shape that did not substantially remain on the plane portion 113 of the automotive component model 111 but remained in the longitudinal direction of the bent ridge line section 115. In contrast, as illustrated in FIG. 8(b), an optimized shape 123 of the stiffened member in Comparative example 1 did not substantially remain on the bent ridge line section 115 but remained in a substantially H shape on the plane portion 113.

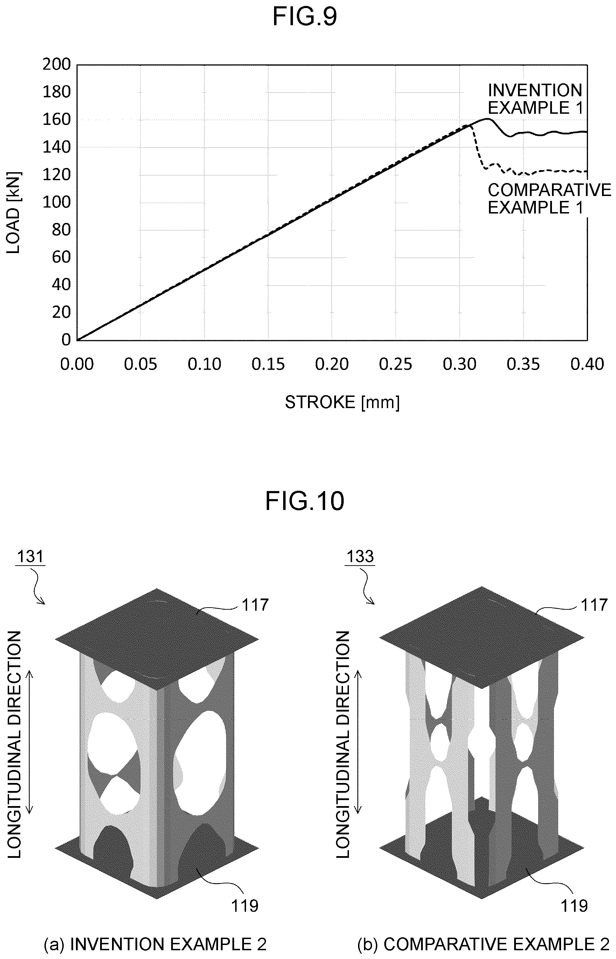

FIG. 9 illustrates a result of obtaining a load-stroke curve by procedures in which the optimized shape 121 of the stiffened member according to Invention example 1 and the optimized shape 123 of the stiffened member according to Comparative example 2 were attached to the automotive component model 111, and an axial compression analysis in which a compressive load was input to the flat plate 117 on one end side in the longitudinal direction was performed.

As illustrated in FIG. 9, in Invention example 1 and Comparative example 1, since the stiffened member having the optimized shape 121 or 123 was attached to the original automotive component model 111, there was no large difference in stiffness (inclination in the elastic region of the load-stroke curve) between them.

However, the maximum load in Invention example 1 in which the maximization of the buckling load is defined as the objectives was higher than that in Comparative example 1, and the load in Invention example 1 was higher than that in Comparative example 1 even in the stroke after the maximum load.

This result has revealed that the automotive component model 111 to which the stiffened member having the optimized shape 121 according to Invention example 1 was attached is superior in crashworthiness in the deformation mode of axial crush.

<Implementation example 2: optimized shape of automotive component>

In Implementation example 2, an optimized shape of an automotive component model 111 having a rectangular cylindrical shape modeled by a shell element illustrated in FIG. 3 was obtained as a design target portion.

Similarly to Implementation example 1 described above, the automotive component model 111 is formed in a rectangular cylindrical shape by the four plane portions 113 and the bent ridge line section 115 connecting the adjacent plane portions 113. In addition, a flat plate 117 and a flat plate 119 are provided at both ends in the longitudinal direction of the automotive component model 111. The automotive component model 111 was made of a steel sheet having a rectangular cylinder side of 50 mm, a height of 100 mm, a sheet thickness of 1 mm, and a tensile strength of 1180 MPa.

Implementation example 2 includes Invention example 2, in which optimization analysis for obtaining an optimized shape for enhancing the crashworthiness of the automotive component model 111 subjected to a compressive load in the longitudinal direction was performed.

In the optimization analysis, first, an automotive component model 111 modeled by a shell element was acquired, and the plane portion 113 and the bent ridge line section 115 in the automotive component model 111 were set as a design space. Subsequently, a design target portion model was generated using shell elements of the plane portion 113 and the bent ridge line section 115 for the set design space.

Next, similarly to Implementation example 1, a loading condition and a constraint condition, and objectives and constraints were set for the automotive component model 111 as optimization analysis conditions. However, in Implementation example 2, the constraint condition was set such that the volume of the design target portion model is to be 50% or less of the volume of the design space.

Subsequently, optimization analysis by topology optimization was performed under the set optimization analysis conditions, and the remaining design target portion model was obtained as an optimized shape.

The implementation example includes Comparative example 2, in which only the objectives among the optimization analysis conditions set in Invention example 2 were changed to "minimization of displacement of flat plate 117", and optimization analysis by topology optimization was performed to obtain the optimized shape of the design target portion model.

FIG. 10 illustrates an optimized shape of the automotive component model 111 obtained by optimization analysis in Invention example 2 and Comparative example 2. As illustrated in FIG. 10(a), an optimized shape 131 of the automotive component model in Invention example 2 is a shape in which the plane portion 113 substantially disappeared and remaining portions are present in portions corresponding to the bent ridge line sections 115 (FIG. 3). In contrast, as illustrated in FIG. 10(b), an optimized shape 133 of the automotive component model in Comparative example 2 is a shape in which the bent ridge line sections 115 substantially disappeared and remaining portions are present in portions corresponding to the plane portions 113 (FIG. 3).

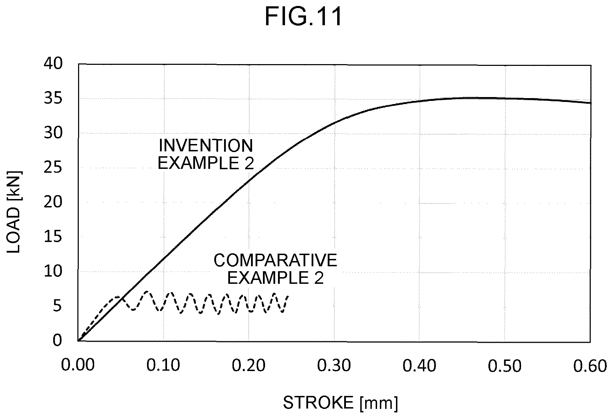

FIG. 11 illustrates a result of obtaining a load-stroke curve by procedures in which an axial compression analysis in which a compressive load was input to the flat plate 117 on one end side in the longitudinal direction was performed for each of the optimized shape 131 according to Invention example 2 and the optimized shape 133 according to Comparative example 2. As illustrated in FIG. 11, the stiffness (inclination in the elastic region of the load-stroke curve) was higher in Comparative example 2 aimed at maximizing the stiffness. However, the maximum load was higher in Invention example 2 in which maximization of the buckling load was set as objectives, while the maximum load in Comparative example 2 was significantly lower than that in Invention example 2.

This result has revealed that the automotive component having the shape according to Invention example 2 is superior in crashworthiness in the deformation mode of axial crush.

Industrial Applicability

According to the present invention, it is possible to provide a method, a device, and a program used in designing an automotive component capable of designing the automotive component so as to enhance crashworthiness of the automotive component subjected to a compressive load in a longitudinal direction at the time of collision of the automobile.

Furthermore, according to the present invention, it is possible to provide an automotive component manufacturing method capable of enhancing crashworthiness of the automotive component subjected to a compressive load in a longitudinal direction at the time of collision of the automobile.

Reference Signs List

| 1 | AUTOMOTIVE COMPONENT DESIGNING DEVICE |
| 3 | DISPLAY DEVICE |
| 5 | INPUT DEVICE |
| 7 | STORAGE DEVICE |
| 9 | WORK DATA MEMORY |
| 11 | ARITHMETIC PROCESSING UNIT |
| 13 | AUTOMOTIVE COMPONENT MODEL ACQUISITION UNIT |
| 15 | DESIGN SPACE SETTING UNIT |
| 17 | DESIGN TARGET PORTION MODEL GENERATION UNIT |
| 19 | OPTIMIZATION ANALYSIS CONDITION SETTING UNIT |
| 21 | OPTIMIZATION ANALYSIS UNIT |
| 23 | DESIGN TARGET PORTION SHAPE DETERMINATION UNIT |
| 31 | AUTOMOTIVE COMPONENT MODEL FILE |
| 100 | AUTOMOTIVE BODY |
| 101 | FRONT SIDE MEMBER |
| 103 | UPPER FRONT PILLAR/FRONT PILLAR UPPER |
| 105 | ROOF RAIL |
| 107 | ROOF CENTER CROSS MEMBER |
| 109 | SIDE SILL |
| 111 | AUTOMOTIVE COMPONENT MODEL |
| 111A | AUTOMOTIVE COMPONENT MODEL |
| 111B | AUTOMOTIVE COMPONENT MODEL |
| 113 | PLANE PORTION |
| 115 | BENT RIDGE LINE SECTION |
| 117 | FLAT PLATE |
| 119 | FLAT PLATE |
| 121 | OPTIMIZED SHAPE (STIFFENED MEMBER, INVENTION EXAMPLE 1) |
| 123 | OPTIMIZED SHAPE (STIFFENED MEMBER, COMPARATIVE EXAMPLE 1) |
| 131 | OPTIMIZED SHAPE (AUTOMOTIVE COMPONENT, INVENTION EXAMPLE 2) |
| 133 | OPTIMIZED SHAPE (AUTOMOTIVE COMPONENT, COMPARATIVE EXAMPLE 2) |

**Claims**

1. An automotive component designing method, being a method of designing an automotive component, being a component subjected to a compressive load in a longitudinal direction at a time of collision of an automobile, the designing being performed so as to enhance crashworthiness of the automotive component, the method comprising steps to be executed by a computer,
   the steps including:

      an automotive component model acquisition step of acquiring an automotive component model obtained by modeling the automotive component;
      a design space setting step of setting a design space in a design target portion, being a portion as a design target, in the acquired automotive component model;
      a design target portion model generation step of generating a design target portion model that performs an optimization analysis process on the design space that has been set;
      an optimization analysis condition setting step of setting optimization analysis conditions including a loading condition of inputting a compressive load in a longitudinal direction of the automotive component model, objectives that maximize a buckling load in a primary buckling mode obtained by a linear buckling analysis, and predetermined constraints related to the design target portion model;
      an optimization analysis step of performing an optimization analysis for obtaining an optimized shape of the design target portion model generated in the automotive component model under the optimization analysis conditions; and

a design target portion shape determination step of determining a shape of the design target portion based on the optimized shape of the design target portion model.

2. The automotive component designing method according to claim 1, wherein in the optimization analysis condition setting step, the objectives are set as maximization of a minimum eigenvalue among eigenvalues that are solutions of an eigenequation indicated in the following Formula (1).

$$([K_E] + \lambda[K_G])\{\Delta\delta\} = \{0\} \qquad \cdots (1)$$

$\lambda$ : Eigenvalue
$[K_E]$ : Stiffness matrix
$[K_G]$ : Initial stress matrix (geometric stiffness matrix)
$\{\Delta\delta\}$ : Eigenmode/natural mode

3. The automotive component designing method according to claim 1 or 2, wherein

a stiffened member that reinforces the automotive component is attached to the automotive component so as to enhance crashworthiness,

the design space setting step sets a two-dimensional space along a surface of the automotive component model as a design space,

the design target portion model generation step generates a design target portion model by modeling the design space using a shell element, and connects the design target portion model with the automotive component model, and

the design target portion shape determination step determines a shape and a position of the stiffened member to be attached to the automotive component based on the optimized shape of the design target portion model in the automotive component model.

4. The automotive component designing method according to claim 1 or 2, wherein the design space setting step sets the design space with the automotive component model itself targeted as the design target portion.

5. The automotive component designing method according to any one of claims 1 to 4, wherein the optimization analysis step implements topology optimization as the optimization analysis to obtain the optimized shape of the design target portion model.

6. The automotive component designing method according to any one of claims 1 to 4, wherein the optimization analysis step implements plate thickness optimization as optimization analysis of the design target portion model, and obtains a plate thickness distribution of the design target portion model obtained by the plate thickness optimization, as the optimized shape of the design target portion model.

7. The automotive component designing method according to any one of claims 1 to 6, wherein the optimization analysis condition setting step sets the loading condition based on a load that is input in a longitudinal direction of the automotive component obtained in advance by a collision analysis targeted for all or a part of the automobile including the automotive component as an analysis target.

8. An automotive component designing device, being a device of designing an automotive component, being a component subjected to a compressive load in a longitudinal direction at a time of collision of an automobile, the designing being performed so as to enhance crashworthiness of the automotive component, the device comprising:

an automotive component model acquisition unit that acquires an automotive component model obtained by modeling the automotive component;

a design space setting unit that sets a design space in a design target portion, being a portion as a design target, in the acquired automotive component model;

a design target portion model generation unit that generates a design target portion model that performs an optimization analysis process on the design space that has been set;

an optimization analysis condition setting unit that sets optimization analysis conditions including a loading condition of inputting a load in a longitudinal direction of the automotive component model, objectives that maximize a buckling load in a primary buckling mode obtained by a linear buckling analysis regarding the automotive component model, and predetermined constraints related to the design target portion model;

an optimization analysis unit that performs an optimization analysis regarding the automotive component model for which the design target portion model has been generated, under the optimization analysis conditions so as to obtain an optimized shape of the design target portion model; and

a design target portion shape determination unit that determines a shape of the design target portion based on the optimized shape of the design target portion model.

9. An automotive component designing program, being a program of designing an automotive component, being a component subjected to a compressive load in a longitudinal direction at a time of collision of an automobile, the designing being performed so as to enhance crashworthiness of the automotive component, the program causing a computer to function as units comprising:

   an automotive component model acquisition unit that acquires an automotive component model obtained by modeling the automotive component;

   a design space setting unit that sets a design space in a design target portion, being a portion as a design target, in the acquired automotive component model;

   a design target portion model generation unit that generates a design target portion model that performs an optimization analysis process on the design space that has been set;

   an optimization analysis condition setting unit that sets optimization analysis conditions including a loading condition of inputting a load in a longitudinal direction of the automotive component model, objectives that maximize a buckling load in a primary buckling mode obtained by a linear buckling analysis regarding the automotive component model, and predetermined constraints related to the design target portion model;

   an optimization analysis unit that executes an optimization analysis of obtaining an optimized shape of the design target portion model under the optimization analysis conditions; and

   a design target portion shape determination unit that determines a shape of the design target portion based on the optimized shape of the design target portion model.

10. An automotive component manufacturing method, being a method of manufacturing an automotive component, being a component subjected to a compressive load in a longitudinal direction at a time of collision of an automobile, the method being performed so as to enhance crashworthiness of the automotive component, the method comprising:

    producing the stiffened member being a plate-shaped member by press forming in accordance with the shape of the stiffened member determined by the automotive component designing method according to claim 3; and

    attaching the produced plate-shaped stiffened member to the determined position of the stiffened member in the automotive component to manufacture the automotive component.

11. An automotive component manufacturing method, being a method of manufacturing an automotive component, being a component subjected to a compressive load in a longitudinal direction at a time of collision of an automobile, the method being performed so as to enhance crashworthiness of the automotive component, the method comprising manufacturing the automotive component based on the shape of the automotive component determined by the automotive component designing method according to claim 4.

# FIG.1

ARITHMETIC PROCESSING UNIT 11

| AUTOMOTIVE COMPONENT MODEL ACQUISITION UNIT | 13 |

DESIGN SPACE SETTING UNIT 15

| DESIGN TARGET PORTION MODEL GENERATION UNIT | 17 |

| OPTIMIZATION ANALYSIS CONDITION SETTING UNIT | 19 |

OPTIMIZATION ANALYSIS UNIT 21

| DESIGN TARGET PORTION SHAPE DETERMINATION UNIT | 23 |

1

3 DISPLAY DEVICE

5 INPUT DEVICE

STORAGE DEVICE

7

31 AUTOMOTIVE COMPONENT MODEL FILE

WORK DATA MEMORY 9

# FIG.2

## FIG.3

## FIG.4

# FIG.5

# FIG.6

# FIG.7

AUTOMOTIVE COMPONENT MODEL
ACQUISITION STEP — S1

↓

DESIGN SPACE SETTING STEP — S3

↓

DESIGN TARGET PORTION MODEL
GENERATION STEP — S5

↓

OPTIMIZATION ANALYSIS CONDITION
SETTING STEP — S7

↓

OPTIMIZATION ANALYSIS STEP — S9

↓

DESIGN TARGET PORTION SHAPE
DETERMINATION STEP — S11

# FIG.8

(a) INVENTION EXAMPLE 1    (b) COMPARATIVE EXAMPLE 1

# FIG.9

# FIG.10

(a) INVENTION EXAMPLE 2          (b) COMPARATIVE EXAMPLE 2

FIG.11

**INTERNATIONAL SEARCH REPORT**

| International application No. |
|---|
| **PCT/JP2024/021842** |

| A. | CLASSIFICATION OF SUBJECT MATTER |
|---|---|

*G06F 30/20*(2020.01)i; *G06F 30/15*(2020.01)i
FI:  G06F30/20; G06F30/15

According to International Patent Classification (IPC) or to both national classification and IPC

| B. | FIELDS SEARCHED |
|---|---|

Minimum documentation searched (classification system followed by classification symbols)

G06F30/00-30/28; B62D65/00; B62D21/00-39/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2014-149733 A (JFE STEEL CORPORATION) 21 August 2014 (2014-08-21) paragraphs [0038]-[0070] | 1-11 |
| A | 加藤幹大 外2名, 部材座屈を考慮したラティスサンドイッチパネルの最適化設計に関する研究, 計算工学講演会論文集, [CD-ROM], June 2020, vol. 25, (KATO, Kandai et al., Study on optimal design of lattice sandwich panel in consideration of local buckling, Proceedings of the Conference on Computational Engineering and Science) particularly, 「2．最適化概要」, non-official translation ([2. Summary of optimization]) | 1-11 |
| A | JP 7306510 B1 (JFE STEEL CORPORATION) 11 July 2023 (2023-07-11) claims | 1-11 |

☐ Further documents are listed in the continuation of Box C.    ☑ See patent family annex.

| \* | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 August 2024** | **13 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/021842**

| Patent document cited in search report | | | Publication date (day/month/year) | Patent family member(s) | | | Publication date (day/month/year) |
|---|---|---|---|---|---|---|---|
| JP | 2014-149733 | A | 21 August 2014 | US | 2015/0356237 | A1 | |
| | | | | paragraphs [0107]-[0145] | | | |
| | | | | WO | 2014/119167 | A1 | |
| | | | | EP | 2953040 | A1 | |
| | | | | CN | 104956369 | A | |
| | | | | KR | 10-2015-0103374 | A | |
| JP | 7306510 | B1 | 11 July 2023 | WO | 2023/166830 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5585672 B

**Non-patent literature cited in the description**

- Computer Based Structural Engineering Course II-6-B Buckling Problem Analysis. **TADAHIKO KAWAI**. The Japan Society of Steel Construction. Baifukan, October 1974, 52-67